(19) **Europäisches Patentamt**

**European Patent Office**

**Office européen des brevets**

(11) **EP 0 797 105 B1**

(12) **EUROPÄISCHE PATENTSCHRIFT**

(45) Veröffentlichungstag und Bekanntmachung des Hinweises auf die Patenterteilung:
**11.08.2004 Patentblatt 2004/33**

(51) Int Cl.$^7$: **G01S 15/10**, G01S 7/527, G01F 1/66

(21) Anmeldenummer: **97104518.2**

(22) Anmeldetag: **17.03.1997**

(54) **Verfahren zur Laufzeitmessung eines elektrischen, elektromagnetischen oder akustischen Signals**

Method for measuring the time of flight of electric, electromagnetic or acoustic signals

Procédé pour la mesure du temp de trajet d'un signal électrique, électromagnétique, ou acoustique

(84) Benannte Vertragsstaaten:
**CH DE DK GB LI NL**

(30) Priorität: **21.03.1996 DE 19611233**

(43) Veröffentlichungstag der Anmeldung:
**24.09.1997 Patentblatt 1997/39**

(73) Patentinhaber: SIEMENS
**AKTIENGESELLSCHAFT**
**80333 München (DE)**

(72) Erfinder:
- **Kroemer, Nils**
  **09337 Hohenstein-Ernstthal (DE)**
- **Freund, Arthur**
  **97633 Saal (DE)**

(56) Entgegenhaltungen:
EP-A- 0 109 129          WO-A-94/11753
WO-A-95/23344          WO-A-95/28619
DE-A- 3 726 670          US-A- 5 437 506

## Beschreibung

Die Erfindung betrifft ein Verfahren zur Laufzeitmessung eines elektrischen, elektromagnetischen oder akustischen Signals zwischen einem Sender und einem Empfänger, wobei der Sender pulsförmige Signale abgibt, die den Empfänger als über mehrere Schwingungen ansteigende und wieder abfallende Wellengruppe erreichen.

Aus der EP-PS 0 452 531 ist ein derartiges Verfahren bekannt. Die Laufzeitmessung beispielsweise eines Ultraschallsignals beruht darauf, daß von einem Sendewandler ein pulsförmiges Schallsignal in das Meßmedium eingekoppelt und nach dem Durchlaufen der Meßstrecke von einem Empfangswandler detektiert wird. Die Schallaufzeit ist die Zeitdifferenz zwischen dem Sendevorgang und dem Eintreffen des Ultraschallsignals am Empfangsort. Bei einer Schallreflexion wird das gesendete Schallsignal an einer Grenzschicht zwischen dem Meßmedium und einem angrenzenden Medium reflektiert, bevor es zum Empfangswandler gelangt. In diesem Fall kann auch ein einziger Schallwandler wechselseitig als Sende- und Empfangswandler betrieben werden.

Die Ultraschall-Laufzeitmessung ist für vielfältige Meßaufgaben einsetzbar. Hierzu zählen beispielsweise die Abstandsmessung und die Durchflußmessung in gasförmigen oder flüssigen Medien. Ein anderes typisches Anwendungsgebiet ist die zerstörungsfreie Werkstoffprüfung, zu der im weiteren Sinne auch die Wanddickenmessung gehört.

Für die Bestimmung der Laufzeit ist in der obengenannten Druckschrift das Puls-Front-Verfahren beschrieben, das im einfachsten Fall darauf beruht, daß die Impulsfront des analogen Empfangssignals mittels eines Schwellwertdetektors erfaßt wird. Ein mit dem Sendevorgang gestarteter Laufzeitzähler wird bei Ansprechen des hierzu verwendeten Empfangssignalkomparators gestoppt. Nachteilig hierbei ist, daß der exakte Stoppzeitpunkt vom Verhältnis des eingestellten Schwellwertes zur Signalamplitude abhängt. Dadurch ist die erzielbare Genauigkeit der Laufzeitmessung bei veränderlicher Signalamplitude eingeschränkt. Dieser Nachteil wird umgangen, indem der auf das Ansprechen des Empfangssignalkomparators nächstfolgende Signal-Nulldurchgang für das Stoppen des Laufzeitzählers genutzt wird. Die Nulldurchgangsdetektion erfolgt mit einem zweiten Komparator, dessen Schaltschwelle nahe dem Bezugspotential des Empfangssignals eingestellt ist. Mit diesem Verfahren ist eine von der Empfangssignalamplitude nahezu unabhängige Laufzeitmessung möglich.

Nachteilig bei dem beschriebenen Verfahren ist die Gefahr von Fehltriggerungen bei gestörten Empfangssignalen. Auch wenn das Empfangssignal nur innerhalb eines Meßfensters ausgewertet wird, können Störimpulse vor dem Eintreffen der eigentlichen Wellengruppe des Empfangssignals auftreten, deren Amplitude oberhalb der eingestellten Schwelle des Schwellwertkomparators liegt und welche infolge einer Fehltriggerung die Laufzeitmessung verfälschen. Zur Unterdrückung dieser Störimpulse ist eine konventionelle Frequenzfilterung meist nicht ausreichend, da in Störimpulsen, insbesondere bei akustisch induzierten Störungen, Spektralanteile enthalten sind, welche den Sensor des Empfängers in dem für die Messung genutzten Frequenzbereich anregen, so daß ihre Unterscheidung vom Nutzsignal sehr erschwert wird. Derartige Störimpulse treten insbesondere bei der Ultraschall-Durchflußmessung infolge von lokalen Verwirbelungen und Kavitationseffekten bei hohen Strömungsgeschwindigkeiten eines Meßmediums auf, so daß die Meßunsicherheit stark ansteigt und im Extremfall selbst die grobe zeitliche Lage der Wellengruppe des Empfangssignals nicht mehr bestimmt werden kann.

Bei hoher Signaldämpfung, beispielsweise infolge zunehmender Schallabsorption im Ausbreitungsmedium, verschlechtert sich der Abstand zwischen Nutzsignal und Rauschanteil. Ein ausreichender Signal-Rausch-Abstand ist aber eine Voraussetzung für die Anwendung der Puls-Front-Methode. Verfahren zur Verbesserung des Signal-Rausch-Abstands bei gestörten, repetierenden Signalen, wie z. B. das Averaging-Verfahren, bei welchem das Signal digital abgetastet, gespeichert und der Mittelwert aus aufeinanderfolgenden Ereignissen gebildet wird, sind jedoch meist phasensensitiv und daher gerade für Ultraschallsignale mit veränderlichen Laufzeiten, z. B. wegen einer Änderung der Schallgeschwindigkeit infolge von Temperaturschwankungen, nur beschränkt anwendbar.

Für die Anwendung des Puls-Front-Verfahrens ist auch eine Verzerrung des Empfangssignals gegenüber einem Normalzustand kritisch. Eine Medienabhängigkeit der Form der beim Empfänger ankommenden Wellengruppen hat im wesentlichen zwei Ursachen. Zum einen unterscheiden sich die Wellenlängen in verschiedenen Medien je nach Schallgeschwindigkeit, die bei Flüssigkeiten häufig zwischen 800 und 2000 m/s variiert. Parasitäre Reflexionen wirken sich, z. B. durch Interferenz, je nach Wellenlänge unterschiedlich auf Nutzreflexionen aus. Es kann daher beispielsweise für die Anwendung bei einem Ultraschall-Durchflußmesser nicht davon ausgegangen werden, daß sich der Schall in einem ungestörten Schallfeld ausbreitet. Zum anderen sind Dämpfungseffekte auf dem Übertragungsweg vom Meßmedium abhängig. Durch die Signalverzerrungen ist die eindeutige Detektion einer im Normalzustand selektierten Signalwelle für die Nulldurchgangsmessung im Meßbetrieb problematisch.

Aus der US-A 5 437 506 ist ein System zur Messung der Übertragungszeit einer Schallwelle in einem gasförmigen Medium bekannt. Der Sender gibt Signale ab, die den Empfänger als über mehrere Schwingungen ansteigende und wieder abfallende Wellengruppe erreichen. Die Laufzeit wird in Abhängigkeit der Lage des Maximums einer Kreuzkorrelationsfunktion des Empfangssignals mit einem Referenzsignal ermittelt, das eine Wellengruppe mit Schwingungen gleicher Frequenz aufweist.

Aus der WO 95/23344 ist ein Verfahren zur Bestimmung der Lage eines Objekts relativ zum Hintergrund bekannt, bei welchem ebenfalls die Laufzeit von Schallsignalen bestimmt wird.

In der WO 94/11753 ist ein Ultraschallinspektionsverfahren zur Erkennung dreidimensionaler Muster anhand von Schalllaufzeiten beschrieben.

Aus der WO 95/28619 sind ein Verfahren und eine Einrichtung zur akustischen Durchflußmessung bekannt, bei welchen die Differenz zwischen einer Schalllaufzeit stromauf und einer Schalllaufzeit stromab bestimmt wird.

Der Erfindung liegt die Aufgabe zugrunde, ein Verfahren zur Laufzeitmessung eines elektrischen, elektromagnetischen oder akustischen Signals zu finden, das auch bei stark gestörten Signalen, insbesondere bei der Ultraschall-Durchflußmessung in gasförmigen oder flüssigen Medien, gute Ergebnisse liefert.

Zur Lösung dieser Aufgabe weist das neue Verfahren die im Anspruch 1 angegebenen Merkmale auf. In den Unteransprüchen sind vorteilhafte Weiterbildungen des Verfahrens beschrieben.

Das analoge Empfangssignal wird abgetastet, digitalisiert, abgespeichert und mit einem zweiten, bereits vorher gespeicherten Signal bekannter Form und Lage korreliert. Das Maximum der Einhüllenden der Korrelationsfunktion ist ein Maß für die zeitliche Lage des Empfangssignals, bezogen auf das Referenzsignal. Die zeitliche Auflösung dieses Verfahrens ist durch die Abtastfrequenz des Empfangssignals bestimmt. Durch Interpolationsverfahren kann die Genauigkeit bei der Bestimmung der zeitlichen Lage des Maximums auf Zwischenwerte innerhalb des Abstands der Abtastzeitpunkte erhöht werden. Wird beispielsweise ein Empfangssignal, dessen Schwingungen einer Wellengruppe eine Frequenz von 2 MHz aufweisen, mit einer Abtastrate von 20 MHz abgetastet, so beträgt der Abstand der einzelnen Abtastzeitpunkte 50 ns, und für eine Zeitauflösung von 100 ps ist eine 500fache Interpolation der Abtastwerte erforderlich. Eine derartige Zeitauflösung kann in vorteilhafter Weise auch erreicht werden, indem ein Nulldurchgang des Korrelationssignals ausgewertet wird.

Anhand der Figuren, in denen Verläufe der verschiedenen, bei der Durchführung eines erfindungsgemäßen Verfahrens auftretenden Signale dargestellt sind, werden im folgenden die Erfindung sowie Ausgestaltungen und Vorteile näher erläutert.

Im einzelnen zeigen:

| | |
|---|---|
| Figur 1 | den Verlauf eines Empfangssignals bei gestorter Übertragung, |
| Figuren 2A bis 2C | Verläufe eines Empfangssignals, Referenzsignals bzw. einer Kreuzkorrelation bei einer Abtastfrequenz von 1 MHz, |
| Figuren 3A bis 3D | Verläufe eines Empfangssignals, gefilterten Empfangssignals, Referenzsignals bzw. einer Kreuzkorrelationsfunktion von Empfangs- und Referenzsignal bei einer Abtastrate von 25 MHz und |
| Figur 4 | einen zeitlich gedehnten Ausschnitt aus dem Verlauf des gefilterten Empfangssignals nach Figur 3B. |

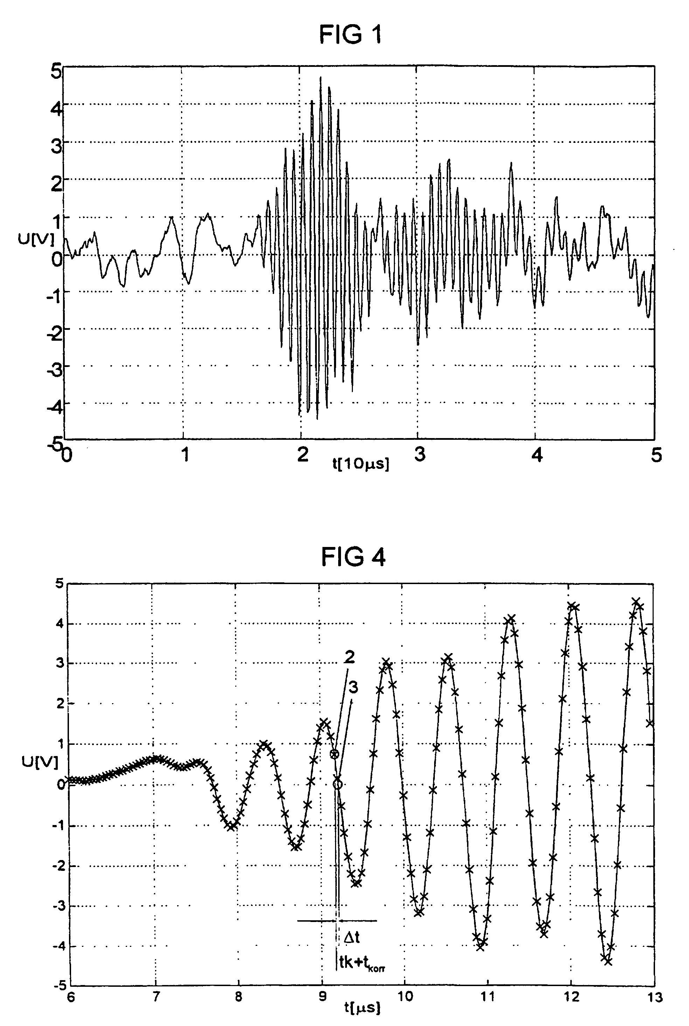

In Figur 1 ist ein Verlauf eines Empfangssignals aufgezeichnet, das unter realen Meßbedingungen aufgenommen wurde. An der Abszisse des Zeitdiagramms ist die Zeit in der Einheit 10 µs, an der Ordinate die Spannung in der Einheit Volt aufgetragen, die an einer Piezoscheibe eines Ultraschall-Durchflußmessers abgegriffen wurde. Obwohl eine den Empfänger erreichende, über mehrere Schwingungen ansteigende und wieder abfallende Wellengruppe, die bei etwa 16 µs beginnt und bei 26 µs endet, noch deutlich erkennbar ist, sind dem Nutzsignal starke Störungen überlagert. Aufgrund der großen Amplitude der Störsignale und der geringen Anstiegsgeschwindigkeit der Schwingungen der Wellengruppe ist das eingangs beschriebene, aus dem Stand der Technik bekannte Verfahren kaum sinnvoll anwendbar. Beispielsweise würde ein Komparator, dessen Schwellwert so eingestellt ist, daß er bei einer ungestörten Wellengruppe mit gleichmäßig steigender Amplitude der Schwingungen auf die nach etwa 19 µs eintreffende positive Halbwelle schalten würde, bei dem gestörten Empfangssignal nach Figur 1 auf die nach etwa 17 µs eintreffende positive Halbwelle schalten, da bereits deren Amplitude die Amplitude der darauffolgenden Halbwelle übersteigt. Eine Selektion der falschen Halbwelle würde zwangsläufig auch zur Selektion des falschen Nulldurchgangs führen und damit zu einem Meßfehler, der eine ganze Wellenlänge beträgt.

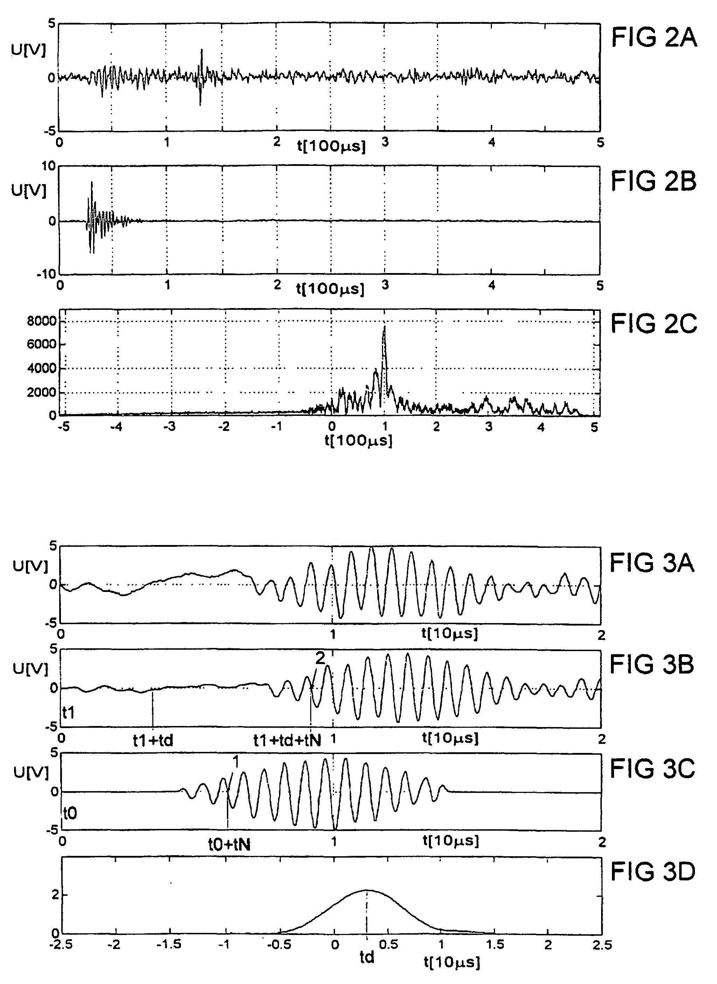

Die an den Abszissen der Figuren 2A bis 2C verwendete Zeiteinheit ist 100 µs. Figur 2A zeigt den Verlauf eines gestörten Empfangssignals, das mit einer Abtastfrequenz von 1 MHz abgetastet, digitalisiert und abgespeichert wurde. Da es sich bei dem Nutzsignal, einer über mehrere Schwingungen ansteigenden und wieder abfallenden Wellengruppe, um ein bandbegrenztes Signal handelt, genügt es bereits, die Abtastrate größer als die zweifache Bandbreite des Nutzsignals zu wählen. Hierdurch läßt sich mit vergleichsweise geringer Speichertiefe der gesamte, für die Messung relevante Bereich des Empfangssignals auswerten. Für die grobe Abtastung genügt ein Speicher für 1000 Abtastwerte, um eine Zeitspanne von 1 ms zu überstreichen. Diese Zeitspanne ist für die meisten Anwendungsfälle einer Ultraschall-Durchflußmessung ausreichend. In dem gezeigten Verlauf des Empfangssignals ist die Wellengruppe des Nutzsignals kaum erkennbar.

In Figur 2B ist ein für den Fall einer ungestörten Übertragung aufgezeichnetes Referenzsignal mit der gleichen Abtastfrequenz wie in Figur 2A dargestellt. Bei diesem Referenzsignal tritt wiederum die Wellengruppe deutlich hervor.

Durch Korrelation des Empfangssignals nach Figur 2A mit dem abgespeicherten Referenzsignal nach Figur 2B wurde eine Kreuzkorrelationsfunktion nach Figur 2C gewonnen. Die zeitliche Lage des Maximums der Korrelationsfunktion ist ein Maß für die zeitliche Verschiebung zwischen dem bekannten Referenzsignal und dem Nutzsignal, das in dem gestörten Empfangssignal enthalten ist. Somit kann die zeitliche Lage des Nutzsignals mit einer durch die Abtastrate bestimmten Auflösung berechnet werden, indem beispielsweise das Maximum der Einhüllenden der Korrelationsfunktion ausgewertet wird. Dieser Schritt einer groben Abtastung des Empfangssignals in einem größeren Meßfenster kann entfallen, wenn die ungefähre zeitliche Lage des Nutzsignals hinreichend bekannt ist, beispielsweise bei näherungsweise bekannter Schallgeschwindigkeit des Übertragungsmediums, oder wenn die Lage auf andere einfache Weise bestimmt werden kann. Anstelle des ungestörten Empfangssignals gemäß Figur 2B könnte auch ein codiertes Sendesignal als Referenzsignal dienen.

Anhand der nun ungefähr bekannten zeitlichen Lage der Wellengruppe wird ein kleineres Meßfenster generiert, welches derart gesteuert wird, daß die Abtastung und Digitalisierung des Empfangssignals unmittelbar vor dem Eintreffen der Wellengruppe gestartet wird. Eine nun hochauflösende Abtastung erfolgt mit einer Abtastrate, die wesentlich größer als die Trägerfrequenz des Nutzsignals ist und zumindest mehr als das Vierfache, vorzugsweise mehr als das Zehnfache, beträgt.

In Figur 3A ist ein gestörtes Empfangssignal in einem zeitlich kleineren Meßfenster dargestellt, Figur 3B zeigt das Empfangssignal nach einer Filterung mit einem Bandpaßfilter, Figur 3C ein Referenzsignal, das einem ungestörten Empfangssignal entspricht, und Figur 3D eine Korrelationsfunktion des gefilterten Empfangssignals nach Figur 3B und des Referenzsignals nach Figur 3C. Die Zeiteinheit auf der Abszisse ist jeweils 10 µs, die Einheit auf der Ordinate beträgt 1 V. Ein für die Laufzeitmessung vorgegebener Signal-Nulldurchgang 1 ist um eine bekannte Zeitspanne $tN$ gegenüber einem Anfangszeitpunkt $t0$ des Meßfensters in Figur 3C verschoben. Die auf den Wert Null bezogene zeitliche Lage des Maximums der Korrelationsfunktion in Figur 3D entspricht einer zeitlichen Verschiebung $td$ zwischen dem bekannten Referenzsignal nach Figur 3C und dem gefilterten Empfangssignal nach Figur 3B innerhalb des Meßfensters. Somit kann unter Berücksichtigung der Anfangszeiten für die Abtastung von Empfangs- und Referenzsignal, $t1$ bzw. $t0$, die Laufzeit des Empfangssignals mit einer durch die Abtastrate bestimmten Auflösung berechnet werden.

Alternativ zu einem Referenzsignal, das einem Empfangssignal bei ungestörter Übertragung entspricht, kann die Korrelation auch mit einem codierten Sendesignal erfolgen, wobei die Codierung im einfachsten Fall in einer burstförmigen Sendepulsfolge besteht. In einer anderen Ausführungsform kann insbesondere bei der Ultraschall-Durchflußmessung die Korrelation zwischen den jeweils aufeinanderfolgenden Empfangssignalen aus Messungen stromauf und stromab berechnet werden. Die zeitliche Lage des Maximums der Einhüllenden der Korrelationsfunktion ist dann ein direktes Maß für die Zeitdifferenz zwischen den beiden Signalen. Dieses Verfahren ist vor allem dann vorteilhaft, wenn die Form der Empfangssignale wegen veränderter Übertragungsbedingungen stark von einem bei ungestörter Übertragung gewonnenen Referenzsignal abweicht. Im allgemeinen ist die Übereinstimmung der stromauf und stromab gewonnenen Empfangssignale besser, und das Maximum der Korrelationsfunktion tritt deutlicher hervor.

Da die Abtastrate wesentlich größer als die Trägerfrequenz des Nutzsignals ist, kann die Zeitverschiebung zwischen Empfangs- und Referenzsignal mit einer Auflösung bestimmt werden, welche deutlich feiner als die Periodendauer der Schwingungen einer Wellengruppe ist. Anhand der zeitlichen Lage des Maximums der Korrelationsfunktion kann eine eindeutige Bestimmung der Ordnung der Nulldurchgänge des Empfangssignals, d. h. eine eindeutige Numerierung innerhalb einer Wellengruppe, vorgenommen werden. Ein vorgegebener Signal-Nulldurchgang, in Figur 3B der Signal-Nulldurchgang 2, der einem Signal-Nulldurchgang 1 in Figur 3C entspricht, welcher für die Laufzeitmessung besonders geeignet ist, kann somit sicher selektiert oder detektiert werden.

Die im Raster der Abtastperiodendauer $T$ aufgelöste Laufzeit $tk$ des Empfangssignals ergibt sich unter Berücksichtigung einer Korrekturzeit $t_{korr}$, welche die Ordnung des vorgegebenen Nulldurchgangs innerhalb der Wellengruppe sowie schaltungs- und sensorabhängige Verzögerungszeiten beinhaltet, schließlich zu:

$$tk = t1 + td + tN - t_{korr}.$$

Durch die schrittweise Verkleinerung des Meßfensters anhand der im vorherigen Schritt berechneten ungefähren Lage der Wellengruppe kann die Meßfensterlänge und somit der Speicherbedarf zur Abspeicherung der Abtastwerte sehr klein gewählt werden. Daher müssen entsprechend geringere Datenmengen verarbeitet werden, so daß die Verarbeitungsgeschwindigkeit der Laufzeitmessung steigt. In dem gezeigten Ausführungsbeispiel ist bereits eine Abspeicherung von 1000 Abtastwerten des Empfangssignals ausreichend.

Figur 4 zeigt einen zeitlich gedehnten Ausschnitt aus dem gefilterten Empfangssignal nach Figur 3B. Die an der Abszisse aufgetragene Zeiteinheit beträgt 1 µs. Die einzelnen Abtastwerte sind auf dem interpolierten Signalverlauf durch Kreuze gekennzeichnet. Die exakte zeitliche Lage des im vorhergehenden Schritt selektierten Nulldurchgangs 2 des gefilterten Empfangssignals wird durch eine Interpolationsrechnung, welche mehrere Abtastwerte unmittelbar vor und nach dem selektierten Nulldurchgang 2 als Eingangsgrößen nutzt, und durch Berechnung des Schnittpunkts der interpolierenden Funktion mit dem Bezugspotential ermittelt. Welches Interpolationsverfahren zur Verwendung kommt, ist im wesentlichen von der Leistungsfähigkeit der Recheneinheit abhängig, die zur Interpolation eingesetzt wird. Als Beispiele seien die lineare, parabolische oder trigonometrische Interpolation sowie die Parameterberechnung nach der Methode der kleinsten Fehlerquadrate genannt.

Es wird der dem Punkt 2 am nächsten gelegene Nulldurchgang vorgegebener Polarität selektiert und der Schnittpunkt 3 der interpolierenden Funktion mit dem Bezugspotential berechnet. Die Laufzeit tL wird schließlich ermittelt als Summe der Laufzeit tk und der Differenz $\Delta$t zwischen den beiden Zeitpunkten 2 und 3:

$$tL = tk + \Delta t.$$

Durch die Interpolation und die Berechnung des Schnittpunkts mit dem Bezugspotential kann eine Auflösung von 10 bis 100 ps erreicht werden, welche für die Durchflußmessung sehr gute Ergebnisse liefert. Zur Verbesserung der statistischen Sicherheit und zur Eliminierung von Störungseinflüssen kann das Empfangssignal vor der Ermittlung der Lage des selektierten Nulldurchgangs mit einem schmalbandigen Filter hoher Flankensteilheit gefiltert werden.

Die Erfindung zeichnet sich somit durch die folgenden Vorteile aus:

- Eine sichere Detektion der Lage der Wellengruppe im Empfangssignal auch bei starkem Störpegel,
- einen minimalen Speicherbedarf durch zeitselektive Abtastung des Empfangssignals,
- eine hohe Zeitauflösung und Meßgenauigkeit durch Auswertung eines Nulldurchgangs nahe dem Beginn einer Wellengruppe,
- insbesondere bei Ultraschall-Durchflußmessern eine Einsatzfähigkeit in gestörter Umgebung auch bei hcchdämpfenden Medien und
- Vermeiden eines zusätzlichen Zeitmeßbausteins und somit geringen Hardware-Aufwand.

Bezuglich weiterer Einzelheiten von Ultraschall-Durchflußmessern, bei denen das Verfahren mit Vorteil eingesetzt wird, insbesondere bezüglich der Schallführung und der Auswertung der Laufzeiten des Ultraschallimpulses zwischen Sender und Empfänger zur Ermittlung der Fließgeschwindigkeit des Mediums, wird auf die DE-PS 43 36 370 verwiesen.

**Patentansprüche**

1.  Verfahren zur Laufzeitmessung eines elektrischen, elektromagnetischen oder akustischen Signals zwischen einem Sender und einem Empfänger, wobei der Sender pulsförmige Signale abgibt, die den Empfänger als über mehrere Schwingungen ansteigende und wieder abfallende Wellengruppe erreichen, wobei

    - das Empfangssignal während eines Meßfensters, das zumindest die Wellengruppe einschließt, mit einer Abtastrate, die ein Vielfaches der Frequenz der Schwingungen der Wellengruppe beträgt, abgetastet, digitalisiert und abgespeichert wird,
    - eine Kreuzkorrelationsfunktion des abgespeicherten Empfangssignals mit einem Referenzsignal, das eine Wellengruppe mit Schwingungen gleicher Frequenz aufweist, berechnet wird und
    - das Maximum der Einhüllenden der Kreuzkorrelationsfunktion ermittelt wird, **dadurch gekennzeichnet,**
    - **daß** in Abhängigkeit von der Lage des Meßfensters und der Lage des Maximums ein Nulldurchgang (2) in der Wellengruppe des Empfangssignals selektiert wird,
    - **daß** aus zumindest zwei dem Nulldurchgang (2) benachbarten Abtastwerten eine interpolierende Funktion, insbesondere durch lineare Interpolation oder die Methode der kleinsten Fehlerquadrate, berechnet wird und
    - **daß** die Laufzeit in Abhängigkeit von der zeitlichen Lage des Nulldurchgangs (3) der interpolierenden Funktion ermittelt wird.

2.  Verfahren nach Anspruch 1, **dadurch gekennzeichnet,**

    - **daß** das Referenzsignal im wesentlichen einem bei ungestörter Übertragung abgespeicherten Empfangssignal entspricht.

3.  Verfahren nach Anspruch 1, **dadurch gekennzeichnet,**

- **daß** das Referenzsignal einem digitalisierten Sendesignal entspricht.

4. Verfahren nach Anspruch 1, **dadurch gekennzeichnet,**

- **daß** das Referenzsignal bei umgekehrter Laufrichtung des elektrischen, elektromagnetischen oder akustischen Signals gewonnen wird und
- **daß** die Differenz der in beiden Laufrichtungen gemessenen Laufzeiten ermittelt wird.

5. Verfahren nach einem der vorhergehenden Ansprüche, **dadurch gekennzeichnet,**

- **daß** in einem ersten Schritt die Laufzeit näherungsweise anhand eines ersten, größeren Meßfensters ermittelt wird, wobei das Empfangssignal mit einer geringeren Abtastrate abgetastet wird,
- **daß** anhand der näherungsweise ermittelten Laufzeit ein zweites, kleineres Meßfenster festgelegt wird, das zumindest die Wellengruppe einschließt, und
- **daß** in einem zweiten Schritt anhand des zweiten Meßfensters und einer höheren Abtastrate eine genauere Laufzeitmessung durchgeführt wird.

6. Verfahren nach einem der vorhergehenden Ansprüche, **dadurch gekennzeichnet,**

- **daß** das Empfangssignal vor der Ermittlung des Nulldurchgangs (3) durch einen Bandpaß, dessen Durchgangsfrequenz der Frequenz der Schwingungen der Wellengruppe entspricht, gefiltert wird.

7. Verfahren nach einem der vorhergehenden Ansprüche, **dadurch gekennzeichnet,**

- **daß** in einem Ultraschall-Durchflußmesser die Laufzeiten von Ultraschallimpulsen stromauf und stromab gemessen werden und
- **daß** aus der Differenz der Laufzeiten auf die Fließgeschwindigkeit eines Meßmediums geschlossen wird.

**Claims**

1. Method for measurement of the delay time of an electrical, electromagnetic or acoustic signal between a transmitter and a receiver, with the transmitter emitting pulsed signals which reach the receiver as a wave group which rises over two or more oscillations and then falls again, with

- the received signal being sampled, digitized and stored during a measurement window which includes at least the wave group, at a sampling rate which is a multiple of the frequency of the oscillations of the wave group,
- a cross-correlation function of the stored received signal being calculated using a reference signal which has a wave group with oscillations at the same frequency, and
- the maximum of the envelopes of the cross-correlation function being determined,

  **characterized**

- **in that** a zero crossing (2) in the wave group of the received signal is selected as a function of the position of the measurement window and of the position of the maximum,
- **in that** an interpolating function is calculated from at least two sample values which are adjacent to the zero crossing (2), in particular by linear interpolation or the least square error method, and
- **in that** the delay time is determined as a function of the timing of the zero crossing (3) of the interpolating function.

2. Method according to Claim 1, **characterized**

- **in that** the reference signal corresponds essentially to a received signal which is stored for undisturbed transmission.

3. Method according to Claim 1, **characterized**

- **in that** the reference signal corresponds to a digitized transmission signal.

**4.** Method according to Claim 1, **characterized**

- **in that** the reference signal is obtained in the opposite direction to the transmission of the electrical, electromagnetic or acoustic signal, and
- **in that** the difference is determined between the delay times measured in the two transmission directions.

**5.** Method according to one of the preceding claims, **characterized**

- **in that**, in a first step, the delay time is determined approximately on the basis of a first, relatively large measurement window, with the received signal being sampled at a lower sampling rate,
- **in that** the approximately determined delay time is used to define a second, narrower measurement window which includes at least the wave group, and
- **in that**, in a second step, a more accurate delay time measurement is carried out using the second measurement window and a higher sampling rate.

**6.** Method according to one of the preceding claims, **characterized**

- **in that** the received signal is filtered before the determination of the zero crossing (3), by means of a bandpass filter, whose pass frequency corresponds to the frequency of the oscillations of the wave group.

**7.** Method according to one of the preceding claims, **characterized**

- **in that** the delay times of ultrasound pulses are measured upstream and downstream in an ultrasound flowmeter, and
- **in that** the flow rate of a measurement medium is deduced from the difference between the delay times.

**Revendications**

**1.** Procédé de mesure du temps de parcours d'un signal électrique, électromagnétique ou acoustique entre un émetteur et un récepteur, l'émetteur émettant des signaux sous forme d'impulsions, qui atteignent le récepteur, sous la forme de groupes d'ondes, ascendants et redescendants sur plusieurs oscillations, dans lequel,

- on échantillonne, numérise et mémorise, le signal de réception pendant une fenêtre de mesure, qui inclut au moins le groupe d'ondes, à un taux d'échantillonnage, qui représente un multiple de la fréquence des oscillations du groupe d'ondes,
- on calcule une fonction de corrélation croisée du signal de réception mémorisé avec un signal de référence, qui a un groupe d'ondes ayant des oscillations de la même fréquence et
- on détermine le maximum de l'enveloppe de la fonction de corrélation croisée, **caractérisé**
- **en ce qu'**on sélectionne, en fonction de la position de la fenêtre de mesure et de la position du maximum, un passage (2) par zéro dans le groupe d'ondes du signal de réception,
- **en ce que** l'on calcule, à partir d'au moins deux valeurs d'échantillonnage voisines du passage (2) par zéro, une fonction d'interpolation, notamment par interpolation linéaire ou par la méthode des moindres carrés et,
- **en ce que** l'on détermine le temps de parcours, en fonction de la position dans le temps, du passage(3) par zéro de la fonction d'interpolation.

**2.** Procédé suivant la revendication 1, **caractérisé**

- **en ce que** le signal de référence correspond sensiblement à un signal de réception mémorisé pour une transmission non parasitée.

**3.** Procédé suivant la revendication 1, **caractérisé**

- **en ce que** le signal de référence correspond à un signal d'émission numérisé.

**4.** Procédé suivant la revendication 1, **caractérisé**

- **en ce que** l'on obtient le signal de référence pour un sens inverse de parcours du signal électrique, électromagnétique ou acoustique et
- **en ce que** l'on détermine la différence des temps de parcours mesurés dans les deux sens de parcours.

5. Procédé suivant l'une des revendications précédentes, **caractérisé**

- **en ce que**, dans un premier stade, on détermine le temps de parcours approximativement au moyen d'une première grande fenêtre de mesure, le signal de réception étant échantillonné avec un taux d'échantillonnage assez petit,
- **en ce que**, au moyen du temps de propagation déterminé approximativement, on fixe une deuxième fenêtre de mesure plus petite, qui contient au moins le groupe d'ondes,
- **en ce que**, dans un deuxième stade, on effectue, au moyen de la deuxième fenêtre de mesure et d'un taux d'échantillonnage plus grand, une mesure plus précise du temps de parcours.

6. Procédé suivant l'une des revendications précédentes, **caractérisé**

- **en ce que**, l'on filtre le signal de réception avant la détermination du passage (3) par zéro, par une bande passante dont la fréquence de transmission correspond à la fréquence des oscillations du groupe d'ondes.

7. Procédé suivant l'une des revendications précédentes, **caractérisé**

- **en ce que** l'on mesure, en amont et en aval, dans un dispositif de mesure du débit des ultrasons, les temps de parcours d'impulsions ultrasonores et,
- **en ce que** l'on déduit, de la différence des temps de propagation, la vitesse d'écoulement d'un fluide à mesurer.

## FIG 1

## FIG 4

FIG 2A

FIG 2B

FIG 2C

FIG 3A

FIG 3B

FIG 3C

FIG 3D